# EUROPÄISCHE PATENTSCHRIFT

(11) **EP 3 149 378 B1**
(45) Veröffentlichungstag und Bekanntmachung des Hinweises auf die Patenterteilung: **03.07.2019**
(21) Anmeldenummer: 15724325.4
(22) Anmeldetag: 27.05.2015
(51) Int. Cl.: F16L 25/01, F16L 33/30, H01R 4/64, H01R 13/00, H05F 3/02, H01R 13/648

(54) **FLUIDLEITUNG**
FLUID CONDUIT
CONDUITE DE FLUIDE

(30) Priorität: 27.05.2014 DE 102014107433
(43) Veröffentlichungstag der Anmeldung: 05.04.2017
(73) Patentinhaber: NORMA Germany GmbH, 63477 Maintal (DE); AUDI AG, 85045 Ingolstadt (DE)
(72) Erfinder: HARTMANN, Peter, 63741 Aschaffenburg (DE); KOHLHAUS, Olaf, 99947 Langensalza (DE); LEGEL, Thomas, 63110 Rodgau (DE); EICKSTÄDT, Jörg, 85080 Gaimersheim (DE)
(74) Vertreter: Patentanwälte Olbricht Buchhold Keulertz
(86) Internationale Anmeldenummer: PCT/EP2015/061705
(87) Internationale Veröffentlichungsnummer: WO 2015/181235

(56) Entgegenhaltungen:
- DE-A1- 3 543 233
- DE-A1-102005 021 915
- DE-A1-102010 060 209
- DE-A1-102012 112 563
- JP-A- H08 270 845
- JP-A- 2001 141 170
- US-A- 4 312 551
- US-A- 4 405 969
- US-A- 5 791 377
- US-A1- 2004 201 217
- US-A1- 2012 161 434

## Beschreibung

Die Erfindung betrifft eine Fluidleitung mit einem Rohr und einem mit dem Rohr verbundenen Leitungsverbinder, wobei das Rohr elektrisch leitfähig ausgebildet ist.

Eine Fluidleitung, die elektrisch leitfähig ausgebildet ist, ist beispielsweise aus DE 198 31 898 A1 bekannt. Man verwendet eine derartige Fluidleitung beispielsweise für Kraftstoffe und Kraftstoffdämpfe. Mit der elektrischen Leitfähigkeit des Rohres möchte man dafür sorgen, dass elektrische Ladungen abgeführt werden können, so dass beispielsweise das Risiko einer Funkenbildung klein gehalten werden kann.

Aus DE 10 2012 112 563 A1 ist eine konfektionierte Fluidleitung bekannt, die eine innere leitfähige Schicht aufweist. Diese Leitung ist mit einem Leitungsverbinder verbunden und zwar so, dass die innere leitfähige Schicht mit den Leitungsverbinderteilen elektrisch verbunden ist. Die Leitungsverbinderteile sind durch eine elektrisch isolierende, insbesondere kappenartige Abdeckung abgedeckt. Die Schutzkappe dient als Berührschutz, um zu verhindern, dass eine Person bei der Berührung eines Leitungsverbinderteils einen elektrischen Schlag erhält.

Aus der DE 10 2010 060 209 A1 ist ein Verbindungselement zwischen einem Schlauch und einer weiteren hydraulischen Leitung bekannt, die beide beispielsweise Teil einer Kraftstoffzuführung sein können. Dabei ist der Schlauch an einem Ende umgestülpt, so dass dessen elektrisch leitende Innenseite nach außen ragt. Dieses Ende ist außerdem über einen Anschluss der hydraulischen Leitung geführt und wird dort mittels eines Befestigungselements, wie einer Spannschelle, fixiert.

Weitere Fluidleitungen mit elektrischen Anschlusselementen sind bekannt aus US 5 791 377 A, US 4 405 969 A, US 2012/161434 A1, DE 35 43 233 A1, DE 10 2005 021915 A1, JP H08 270845 A, US 4 312 551 A, US 2004/201217 A1 und JP 2001 141170 A.

Der Erfindung liegt die Aufgabe zugrunde, Risiken durch Elektrizität an der Fluidleitung mit geringem Aufwand klein zu halten.

Diese Aufgabe wird durch eine Fluidleitung mit den Merkmalen nach Anspruch 1 gelöst. Weitere vorteilhafte Ausführungsbeispiele sind in den abhängigen Ansprüchen definiert.

In vielen Fällen lässt es sich nicht vermeiden, dass beispielsweise durch ein durchströmendes Fluid elektrische Ladungen am Rohr erzeugt werden. Diese elektrischen Ladungen können aufgrund der elektrischen Leitfähigkeit des Rohres fließen, also ihre Position verändern. Sofern der Leitungsverbinder aber nicht elektrisch leitfähig ausgebildet ist, können die Ladungen nur bis zum Leitungsverbinder fließen, so dass hier das Risiko besteht, dass sich eine unerwünscht hohe Spannung aufbaut. Man kann den Leitungsverbinder zwar ebenfalls elektrisch leitfähig ausbilden. Damit ist man aber bei der Wahl der möglichen Leitungsverbinder eingeschränkt. Durch das elektrische Anschlusselement gibt es nun eine Möglichkeit, die elektrischen Ladungen oder allgemein die Elektrizität von der Fluidleitung abzuführen. Die Ladungen können aufgrund der elektrisch leitenden Verbindung vom Rohr zum Anschlusselement auf das Anschlusselement übertreten und von dort problemlos abgeführt werden. Das Anschlusselement ist im Bereich des Leitungsverbinders vorgesehen. Dies hat mehrere Vorteile. Zum einen gibt es im Bereich des Leitungsverbinders eine erhöhte mechanische Stabilität, so dass das Anschlusselement zuverlässig montiert und in Position gehalten werden kann. Zum anderen ist im Bereich des Leitungsverbinders in vielen Fällen ohnehin eine Handhabung bei der Montage erforderlich, so dass man das Anschlusselement hier ohne weiteres mit Mitteln versehen kann, über die die Elektrizität vom Rohr und damit von der Fluidleitung abgeführt werden können.

Hierbei ist bevorzugt, dass das Anschlusselement einen nach außen geführten elektrischen Kontakt aufweist. Ein derartiger Kontakt ermöglicht es, eine elektrische Leitung anzuschließen, durch die das Anschlusselement beispielsweise mit einem Massepotential verbunden werden kann. Ladungen, die sich an der Fluidleitung entwickeln, können dann über den elektrischen Kontakt abgeführt werden.

Erfindungsgemäß weist der Leitungsverbinder einen Anschlussstutzen auf, auf den das Rohr aufgesteckt ist, wobei das Anschlusselement auf dem Anschlussstutzen angeordnet ist. Der Anschlussstutzen kann beispielsweise eine "Tannenbaum"-Struktur auf seiner Außenseite aufweisen. Andere Ausgestaltungen sind möglich. Im Bereich des Anschlussstutzens gibt es einen ausreichenden Bauraum, um das Anschlusselement hier positionieren zu können.

Hierbei ist erfindungsgemäß vorgesehen, dass das Anschlusselement einen Ring aufweist, der den Anschlussstutzen umgibt. Damit wird die Montage des Anschlusselements relativ einfach. Man muss das Anschlusselement lediglich auf den Anschlussstutzen aufschieben, um das Anschlusselement am Leitungsverbinder zu montieren. Die hierfür notwendige Montagearbeit erfordert also einen relativ kleinen Zusatzaufwand.

Vorzugsweise weist der Ring in Umfangsrichtung eine Unterbrechung auf, wobei der Ring einen Nenndurchmesser aufweist, der kleiner ist als ein Außendurchmesser des Anschlussstutzens. Der Nenndurchmesser ist der Innendurchmesser des Verbinders im nicht-aufgesteckten Zustand. Durch die Unterbrechung ist es möglich, den Ring bei der Montage auf dem Anschlussstutzen etwas aufzuweiten. Diese Aufweitung ergibt sich automatisch, weil der Nenndurchmesser des Rings kleiner ist als der Außendurchmesser des Anschlussstutzens. Nach erfolgter Montage hält der Ring dann mit einer gewissen Eigenspannung auf dem Anschlussstutzen. Voraussetzung hierfür ist lediglich, dass der Ring in zumindest geringem Umfang elastisch verformbar ist.

Vorzugsweise ist der Ring als Hohlzylinder ausgebildet. Der Ring hat also eine zumindest kleine Erstreckung parallel zur Achse des Anschlussstutzens. Damit wird die Stabilität, mit der der Ring auf dem Anschlussstutzen sitzt, erhöht. Die axiale Länge des Hohlzylinders ist vorzugsweise größer als die Dicke der radialen Wand des Hohlzylinders.

Vorzugsweise weist der Hohlzylinder eine konische Innenform auf. Man kann diese konische Innenform an die Außenform des Anschlussstutzens anpassen, beispielsweise dann, wenn der Anschlussstutzen eine Tannenbaum-Struktur an seiner Außenseite aufweist.

In einer bevorzugten Ausgestaltung ist vorgesehen, dass das Anschlusselement an einer Stirnseite des Rohres zwischen dem Rohr und dem Leitungsverbinder angeordnet ist. In diesem Fall wird das Anschlusselement montiert, bevor das Rohr auf den Anschlussstutzen aufgeschoben wird. Durch die Positionierung des Anschlusselements zwischen der Stirnseite des Rohres und dem Leitungsverbinder wird das Anschlusselement auf dem Anschlussstutzen in einer klar definierten Position parallel zur Achse des Anschlussstutzens gehalten. Eine Verschiebung parallel zu dieser Richtung ist praktisch nicht möglich.

Erfindungsgemäß ist das Rohr zumindest an seiner Innenseite elektrisch leitfähig und das Anschlusselement ist elektrisch mit der Innenseite verbunden. Damit werden elektrische Widerstände zwischen dem Rohr und dem Anschlusselement klein gehalten. Der Übertritt von Ladungen vom Rohr auf das Anschlusselement ist ohne weiteres möglich.

Vorzugsweise verläuft eine elektrische Verbindung zwischen dem Anschlusselement und der Innenseite des Rohres über die Außenseite des Leitungsverbinders. Wenn man die Außenseite des Leitungsverbinders elektrisch leitfähig macht, dann können Ladungen vom Rohr über die Außenseite des Leitungsverbinders zum Anschlusselement gelangen und dann in das Anschlusselement übertreten. Eine derartige elektrische Verbindung kann im Grunde auch bei an sich nicht elektrisch leitfähigen Leitungsverbindern erzeugt werden, beispielsweise durch Auftragen einer elektrisch leitfähigen Schicht.

Erfindungsgemäß ist vorgesehen, dass das Rohr das Anschlusselement zumindest teilweise umgibt. Dies ist insbesondere dann möglich, wenn das Anschlusselement einen Ring aufweist, der eine gewisse axiale Erstreckung, also eine Erstreckung parallel zur Achse des Anschlussstutzens aufweist. In diesem Fall wird das Rohr einfach auf den Ring bzw. auf den axialen Fortsatz des Ringes aufgeschoben, so dass die elektrische Verbindung zwischen dem Rohr und dem Anschlusselement ohne zusätzlichen Aufwand hergestellt werden kann.

Erfindungsgemäß ist vorgesehen, dass das Anschlusselement einen Aufsteckbereich aufweist, dessen Außendurchmesser sich konisch erweitert. Durch die konische Erweiterung des Aufsteckbereichs wird das Rohr beim Aufstecken auf den Aufsteckbereich geweitet und sitzt dann mit einer gewissen Eigenspannung auf dem Aufsteckbereich. Diese Eigenspannung ergibt sich durch die elastischen Eigenschaften des Rohres. Durch die Eigenspannung ergibt sich ein gewisser Anpressdruck des Rohres auf den Aufsteckbereich und damit ein relativ guter elektrischer Kontakt zwischen dem Rohr und dem Anschlusselement.

Vorzugsweise weist das Anschlusselement einen Flachstecker auf. Ein Flachstecker, z.B. nach DIN 46244, kann problemlos verwendet werden, um eine elektrische Leitung anzuschließen.

Die Erfindung wird im Folgenden anhand eines bevorzugten Ausführungsbeispiels in Verbindung mit der Zeichnung beschrieben. Hierin zeigen:
- Fig. 1: eine schematische Darstellung eines Ausschnitts aus einer Fluidleitung,
- Fig. 2: eine perspektivische Darstellung eines Anschlusselements,
- Fig. 3: einen Schnitt III-III nach Fig. 4 und
- Fig. 4: eine Vorderansicht eines Anschlusselements.

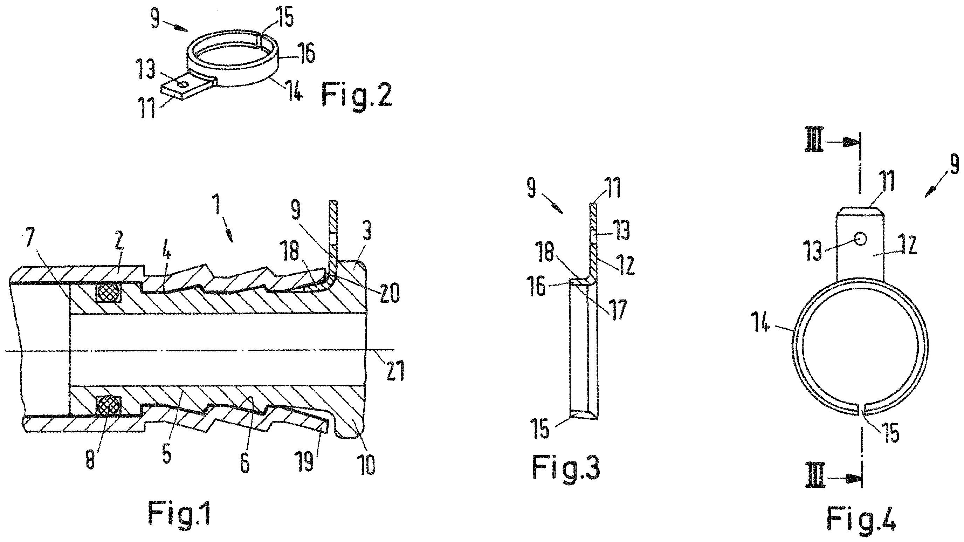

Fig. 1 zeigt einen Ausschnitt aus einer Fluidleitung 1. Die Fluidleitung 1 weist ein Rohr 2 und einen Leitungsverbinder 3 auf. Der Begriff "Rohr" 2 ist hier allgemein zu verstehen. Es kann sich um ein starres Rohr oder ein flexibles Rohr oder um einen Schlauch handeln. Weitere Ausgestaltungen sind möglich.

Das Rohr 2 weist an seiner Innenseite eine elektrisch leitfähige Schicht 4 auf. Alternativ dazu kann das Rohr 2 auch insgesamt elektrisch leitfähig sein.

Der Leitungsverbinder 3 weist einen Anschlussstutzen 5 mit einem Tannenbaumprofil 6 an seiner Außenseite auf. Das Rohr 2 ist auf den Anschlussstutzen 5 aufgeschoben. Das Rohr 2 ist in gewissem Umfang elastisch, d.h. es kann sich an das Tannenbaumprofil 6 des Anschlussstutzens 5 anschmiegen und bildet dann an seiner radialen Außenseite ebenfalls eine Art Tannenbaumprofil.

Das Rohr 2 ist von einem Ende 7 des Anschlussstutzens 5 her auf den Anschlussstutzen 5 aufgeschoben. Im Bereich dieses Endes 7 ist ein Dichtring 8 angeordnet, um eine zuverlässige Abdichtung zwischen dem Anschlussstutzen 5 und dem Rohr 2 zu gewährleisten. Ein derartiger Dichtring ist nicht in allen Fällen erforderlich.

Ein elektrisches Anschlusselement 9 ist auf den Anschlussstutzen 5 aufgesetzt. Das elektrische Anschlusselement ist so weit wie möglich vom Ende 7 entfernt, so dass es an einem Gehäuseteil 10 des Leitungsverbinders 3 anstößt und an dem Gehäuseteil 10 anliegt.

Das Anschlusselement 9 ist in den Fig. 2 bis 4 mit weiteren Einzelheiten dargestellt.

Das Anschlusselement 9 weist einen nach außen geführten elektrischen Kontakt 11 in Form eines Flachsteckers 12 auf. Der Flachstecker weist eine Durchgangsöffnung 13 auf, die zur Verbesserung einer Befestigung eines Kabelschuhs verwendet werden kann. Das Anschlusselement 9 ist insgesamt aus einem elektrisch leitfähigen Material gebildet, beispielsweise aus einem Metall, wie Kupfer oder Stahl. Das Anschlusselement 9 ist in einem gewissen Umfang elastisch nachgiebig ausgebildet.

Das Anschlusselement 9 weist einen Ring 14 auf, der in Umfangsrichtung eine Unterbrechung 15 aufweist. Der Ring 14 ist als Hohlzylinder 16 ausgebildet, der, wie dies in Fig. 3 zu erkennen ist, eine konische Innenform 17 aufweist, wobei der Hohlzylinder 16 vorzugsweise eine axiale Länge aufweist, die größer als seine radiale Wanddicke ist. Die Innenform 17 ist an eine Außenform des Anschlussstutzens 5 in dem Bereich angepasst, wo das Anschlusselement 9 auf dem Anschlussstutzen 5 angeordnet ist. Wenn der Anschlussstutzen 5 das dargestellte Tannenbaumprofil 6 aufweist, dann ist in der Regel kurz vor dem Gehäuseteil 10 ebenfalls eine leichte konische Aufweitung der Außenseite des Anschlussstutzens 5 zu beobachten.

Der Ring 14 weist an seiner radialen Außenseite einen Aufsteckbereich 18 auf, der sich zum Gehäuseteil 10 hin konisch erweitert.

Wie man in Fig. 1 erkennen kann, wird das Rohr 2 auf den Aufsteckbereich 18 aufgeschoben, so dass die elektrisch leitfähige Schicht 4 auf der Außenseite des Rings 14 im Bereich des Aufsteckbereichs 18 zu liegen kommt. Dabei wird das Rohr 2 an seinem Ende 19, das dem Gehäuseteil 10 benachbart ist, etwas aufgeweitet, so dass das Rohr 2 im Bereich des Endes 19 mit einer gewissen radialen Spannung auf dem Ring 14 angeordnet ist. Damit ergibt sich ein relativ großer Kontaktdruck zwischen der Innenseite des Rohres 2 und dem Anschlusselement 9 und damit ein hervorragender elektrischer Kontakt.

In nicht näher dargestellter Weise kann man auch den Leitungsverbinder 3 jedenfalls im Bereich des Anschlussstutzens 5 elektrisch leitfähig machen, so dass Elektrizität über die Außenseite des Leitungsverbinders vom Rohr 2 zum Anschlusselement 9 gelangen kann. Die elektrische Leitfähigkeit kann beispielsweise durch eine elektrisch leitende Schicht, wie einen Lack, gebildet sein.

Das Anschlusselement 9 ist zwischen einer Stirnseite 20 des Rohres 2 und dem Leitungsverbinder 3, genauer gesagt dem Gehäuseteil 10 des Leitungsverbinders 3 angeordnet. Damit wird das Anschlusselement zusätzlich in axialer Richtung, d.h. eine Richtung parallel zur Achse 21 des Anschlussstutzens 5 fixiert.

Die Herstellung einer derartigen Fluidleitung gestaltet sich relativ einfach. Bevor das Rohr 2 auf den Anschlussstutzen 5 aufgeschoben wird, wird das Anschlusselement 9 mit seinem Ring 14 auf den Anschlussstutzen 5 aufgeschoben, bis es an das Gehäuseteil 10 gelangt. Danach wird das Rohr 2 soweit auf den Anschlussstutzen 5 aufgeschoben, dass sein Ende 19 über den Aufsteckbereich 18 gelangt und sich mit einer gewissen Eigenspannung an den Aufsteckbereich 18 des Ringes 14 anschmiegt. Damit ist der Leitungsverbinder im Grunde fertig. Man kann ihn, falls erforderlich, mit einer nicht näher dargestellten Vergussmasse umgießen, wobei natürlich das elektrische Anschlusselement 9 aus der Vergussmasse herausragen muss.

Falls erforderlich, kann das Anschlusselement auch mechanisch mit dem Anschlussstutzen 5 oder dem Gehäuseteil 10 verkrallt oder auf andere Weise formschlüssig verbunden werden, um ein Verdrehen zu verhindern.

## Patentansprüche

1. Fluidleitung (1) mit einem Rohr (2) und einem mit dem Rohr (2) verbundenen Leitungsverbinder (3), wobei das Rohr (2) zumindest an seiner Innenseite elektrisch leitfähig ist, wobei im Bereich des Leitungsverbinders (3) ein elektrisches Anschlusselement (9) vorgesehen ist, das mit der Innenseite des Rohres (2) elektrisch verbunden ist, und wobei der Leitungsverbinder (3) einen Anschlussstutzen (5) aufweist, auf den das Rohr (2) aufgesteckt ist, **dadurch gekennzeichnet, dass** das Anschlusselement (9) auf dem Anschlussstutzen (5) angeordnet ist, wobei das Anschlusselement (9) einen Ring (14) aufweist, der den Anschlussstutzen (5) umgibt, wobei das Rohr (2) das Anschlusselement (9) zumindest teilweise umgibt, wobei das Anschlusselement (9) auf den Anschlussstutzen (5) aufgeschoben ist, wobei das Anschlusselement (9) einen Aufsteckbereich (18) aufweist, dessen Außendurchmesser sich konisch erweitert, und wobei das Rohr (2) auf dem Aufsteckbereich (18) mit einer gewissen Eigenspannung sitzt und geweitet ist.

2. Fluidleitung nach Anspruch 1, **dadurch gekennzeichnet, dass** das Anschlusselement (9) einen nach außen geführten elektrischen Kontakt (11) aufweist.

3. Fluidleitung nach Anspruch 1 oder 2, **dadurch gekennzeichnet, dass** der Ring (14) in Umfangsrichtung eine Unterbrechung (15) aufweist, wobei der Ring (14) einen Nenndurchmesser aufweist, der kleiner ist, als ein Außendurchmesser des Anschlussstutzens (5).

4. Fluidleitung nach einem der Ansprüche 1 bis 3, **dadurch gekennzeichnet, dass** der Ring (14) als Hohlzylinder (16) ausgebildet ist.

5. Fluidleitung nach Anspruch 4, **dadurch gekennzeichnet, dass** der Hohlzylinder (16) eine konische Innenform (17) aufweist.

6. Fluidleitung nach einem der Ansprüche 1 bis 5, **dadurch gekennzeichnet, dass** das Anschlusselement (9) an einer Stirnseite (20) des Rohres (2) zwischen dem Rohr (2) und dem Leitungsverbinder (3) angeordnet ist.

7. Fluidleitung nach Anspruch 1, **dadurch gekennzeichnet, dass** eine elektrische Verbindung zwischen dem Anschlusselement (9) und der Innenseite des Rohres (2) über die Außenseite des Leitungsverbinders (3) verläuft.

8. Fluidleitung nach einem der Ansprüche 1 bis 7, **dadurch gekennzeichnet, dass** das Anschlusselement (9) einen Flachstecker (12) aufweist.

## Claims

1. Fluid line (1) with a tube (2) and a line connector (3) connected to the tube (2), wherein the tube (2) is electrically conductive at least on its inner surface, wherein an electrical connection element (9) is provided in the region of the line connector (3), which connection element is electrically connected to the inside of the tube (2), and wherein the line connector (3) has a connection fitting (5) on which the tube (2) is attached, **characterised in that** the connection element (9) is arranged on the connection fitting (5), wherein the connection element (9) has a ring (14) which surrounds the connection fitting (5), wherein the tube (2) at least partially surrounds the connection element (9), wherein the connection element (9) is pushed onto the connection fitting (5), wherein the connection element (9) has an insertion region (18) whose outer diameter widens conically, and wherein the tube (2) sits on the insertion region (18) with a certain residual stress and is expanded.

2. Fluid line according to claim 1, **characterised in that** the connection element (9) has an electrical contact (11) directed outwards.

3. Fluid line according to claim 1 or 2, **characterised in that** the ring (14) has an interruption (15) in the circumferential direction, wherein the ring (14) has a nominal diameter which is smaller than an outer diameter of the connection fitting (5).

4. Fluid line according to any one of claims 1 to 3, **characterised in that** the ring (14) is designed as a hollow cylinder (16).

5. Fluid line according to claim 4, **characterised in that** the hollow cylinder (16) has a conical internal shape (17).

6. Fluid line according to any one of claims 1 to 5, **characterised in that** the connection element (9) is arranged on an end face (20) of the tube (2) between the tube (2) and the line connector (3).

7. Fluid line according to claim 1, **characterised in that** an electrical connection between the connection element (9) and the inside of the tube (2) extends over the outer surface of the line connector (3).

8. Fluid line according to any one of claims 1 to 7, **characterised in that** the connection element (9) has a blade terminal (12).

## Revendications

1. Conduite de fluide (1) avec un tube (2) et un raccord de conduite (3) relié au tube (2), dans laquelle le tube (2) est conducteur de l'électricité au moins sur sa face interne, dans lequel est présent dans la zone du raccord de conduite (3) un élément de connexion électrique (9) qui est connecté électriquement à la face interne du tube (2), et dans laquelle le raccord de conduite (3) présente un branchement (5) sur lequel est enfiché le tube (2), **caractérisée en ce que** l'élément de connexion (9) est agencé sur le branchement (5), dans laquelle l'élément de connexion (9) présente un anneau (14) qui entoure le branchement (5), dans laquelle le tube (2) entoure au moins en partie l'élément de connexion (9), dans laquelle l'élément de connexion (9) est emboîté sur le branchement (5), dans laquelle l'élément de connexion (9) présente une zone d'enfichage (18) dont le diamètre externe s'élargit en cône, et dans laquelle le tube (2) se loge et s'élargit sur la zone d'enfichage (18) avec une certaine tension propre.

2. Conduite de fluide selon la revendication 1, **caractérisée en ce que** l'élément de connexion (9) présente un contact électrique (11) guidé vers l'extérieur.

3. Conduite de fluide selon la revendication 1 ou 2, **caractérisée en ce que** l'anneau (14) présente dans la direction périphérique une interruption (15), dans laquelle l'anneau (14) présente un diamètre nominal qui est plus petit qu'un diamètre externe du branchement (5).

4. Conduite de fluide selon l'une quelconque des revendications 1 à 3, **caractérisée en ce que** l'anneau (14) se présente sous la forme d'un cylindre creux (16).

5. Conduite de fluide selon la revendication 4, **caractérisée en ce que** le cylindre creux (16) présente une forme interne conique (17).

6. Conduite de fluide selon l'une quelconque des revendications 1 à 5, **caractérisée en ce que** l'élément de connexion (9) est agencé sur une face avant (20) du tube (2) entre le tube (2) et le raccord de conduite (3).

7. Conduite de fluide selon la revendication 1, **caractérisée en ce qu'**un raccord électrique s'étend entre l'élément de connexion (9) et la face interne du tube (2) sur la face externe du raccord de conduite (3).

8. Conduite de fluide selon l'une quelconque des revendications 1 à 7, **caractérisée en ce que** l'élément de connexion (9) présente une fiche plate (12).
